# FASCICULE DE BREVET EUROPEEN

(11) **EP 4 282 543 B1**
(45) Date de publication et mention de la délivrance du brevet: **07.05.2025**
(21) Numéro de dépôt: 23173137.3
(22) Date de dépôt: 12.05.2023
(51) Int. Cl.: B06B 1/02, G01H 11/06

(54) **TRANSDUCTEUR CMUT ET PROCEDE DE FABRICATION D'UN TRANSDUCTEUR CMUT**
CMUT-WANDLER UND VERFAHREN ZUR HERSTELLUNG EINES CMUT-WANDLERS
CMUT TRANSDUCER AND METHOD FOR PRODUCING A CMUT TRANSDUCER

(30) Priorité: 23.05.2022 FR 2204899
(43) Date de publication de la demande: 29.11.2023
(73) Titulaire: Vermon, 37000 Tours (FR)
(72) Inventeur: KIM, Youngil, 37000 TOURS (FR); MEYNIER, Cyril, 37000 TOURS (FR); GROSS, Dominique, 37000 TOURS (FR); HELLER, Jacques, 37000 TOURS (FR); SENEGOND, Nicolas, 37000 TOURS (FR)
(74) Mandataire: Cabinet Beaumont

(56) Documents cités:
- EP-B1- 1 552 721
- EP-B1- 1 908 529
- US-A1- 2007 180 916

## Description

### Domaine technique

La présente description concerne de façon générale le domaine des transducteurs ultrasonores, et, plus particulièrement, celui des transducteurs ultrasonores capacitifs à membrane, aussi appelés transducteurs CMUT (de l'anglais "Capacitive Micromachined Ultrasonic Transducer").

### Technique antérieure

De façon classique, un transducteur CMUT comprend une membrane flexible suspendue au-dessus d'une cavité, une première électrode, appelée électrode inférieure, située du côté de la cavité opposé à la membrane, et une deuxième électrode, appelée électrode supérieure, située du côté de la cavité opposé à la première électrode et solidaire mécaniquement de la membrane flexible. En fonctionnement, une tension de polarisation continue (DC) est appliquée entre les électrodes. Lorsqu'une tension d'excitation alternative appropriée, superposée à la tension de polarisation DC, est appliquée entre les électrodes, la membrane flexible entre en vibration sous l'effet de la variation de la force électrostatique exercée entre les électrodes, entraînant l'émission d'une onde acoustique ultrasonore. A l'inverse, lorsque le transducteur reçoit une onde acoustique ultrasonore, la membrane flexible entre en vibration sous l'effet de la variation de pression mécanique, conduisant à l'apparition, entre les électrodes inférieure et supérieure du transducteur, d'une tension alternative superposée à la tension de polarisation continue, du fait de la variation de capacité entre les électrodes.

Un transducteur CMUT est classiquement couplé à un circuit électronique de contrôle configuré pour, lors d'une phase d'émission, appliquer entre les électrodes du transducteur une tension alternative d'excitation superposée à une tension de polarisation continue, de façon à provoquer l'émission d'une onde acoustique ultrasonore par le transducteur, et, lors d'une phase de réception, appliquer entre les électrodes du transducteur une tension de polarisation continue et lire entre lesdites électrodes une tension alternative générée sous l'effet d'une onde acoustique ultrasonore reçue.

La fréquence d'émission d'un transducteur CMUT est généralement liée à sa fréquence de résonance, qui dépend de divers paramètres et en particulier des caractéristiques géométriques et mécaniques de la membrane et de la cavité, ainsi que de l'environnement extérieur.

Il serait souhaitable de pouvoir disposer d'un transducteur CMUT et d'un procédé de fabrication d'un tel transducteur, palliant tout ou partie des inconvénients des transducteurs CMUT et procédés de fabrication de transducteurs CMUT connus. Le document EP 1 552 721 divulgue un exemple de méthode conventionnelle pour fournir un transducteur CMUT classique.

### Résumé de l'invention

Un mode de réalisation prévoit un procédé, selon la revendication 1, de fabrication d'un transducteur CMUT, comprenant les étapes suivantes :
a) former une première couche d'oxyde de silicium sur une face d'une première couche de silicium définissant une première électrode du transducteur ;
b) former une deuxième couche d'oxyde de silicium sur une face d'une deuxième couche de silicium ;
c) après l'étape a), former, du côté de ladite face de la première couche de silicium, par oxydation localisée du silicium de la première couche de silicium, des murs d'oxyde de silicium ayant une hauteur supérieure à l'épaisseur de la première couche d'oxyde de silicium, lesdits murs délimitant latéralement une cavité du transducteur ; et
d) après les étapes b) et c), reporter et fixer l'ensemble comprenant la deuxième couche de silicium et la deuxième couche d'oxyde de silicium sur l'ensemble comprenant la première couche de silicium, la première couche d'oxyde de silicium et les murs d'oxyde de silicium, de façon à fermer la cavité du transducteur, ladite cavité s'étendant verticalement de la face de la première couche d'oxyde de silicium opposée à la première couche de silicium à la face de la deuxième couche d'oxyde de silicium opposée à la deuxième couche de silicium.

Selon un mode de réalisation, à l'étape a), la première couche d'oxyde de silicium est formée par oxydation thermique en croissance sèche de ladite face de la première couche de silicium et, à l'étape b), la deuxième couche d'oxyde de silicium est formée par oxydation thermique en croissance sèche de ladite face de la deuxième couche de silicium.

Selon un mode de réalisation, l'étape c) comprend une étape de dépôt d'une couche de nitrure de silicium sur la face de la première couche d'oxyde de silicium opposée à la première couche de silicium, suivie d'une étape de gravure localisée de la couche de nitrure de silicium et de la première couche d'oxyde de silicium aux emplacements souhaités des murs d'oxyde de silicium, suivie d'une étape d'oxydation thermique pour former les murs d'oxyde de silicium, suivie d'une étape de retrait de la couche de nitrure de silicium.

Selon un mode de réalisation, le retrait de la couche de nitrure de silicium est réalisé par gravure humide.

Selon un mode de réalisation, à l'étape d), l'ensemble comprenant la deuxième couche de silicium et la deuxième couche d'oxyde de silicium est fixé sur l'ensemble comprenant la première couche de silicium, la première couche d'oxyde de silicium et les murs d'oxyde de silicium par collage direct.

Selon un mode de réalisation, le collage direct mis en œuvre à l'étape d) comprend un recuit à une température comprise entre 700 et 1100°C.

Selon un mode de réalisation, le collage direct mis en œuvre à l'étape d) est un collage de la face de la deuxième couche d'oxyde de silicium opposée à la deuxième couche de silicium sur la face des murs d'oxyde de silicium opposée à la première couche d'oxyde de silicium.

Selon un mode de réalisation, la première couche de silicium est un substrat fixe et la deuxième couche de silicium est une membrane flexible du transducteur.

Selon un mode de réalisation, l'épaisseur de la première couche d'oxyde de silicium est sensiblement égale à l'épaisseur de la deuxième couche d'oxyde de silicium.

Selon un mode de réalisation, le procédé comprend en outre des étapes formation, sur la face de la première couche de silicium opposée à la première couche d'oxyde de silicium, de métallisations de contact du transducteur, et une étape de connexion desdites métallisations de contact à un circuit intégré de contrôle du transducteur.

Selon un mode de réalisation, la première couche de silicium est dopée.

Selon un mode de réalisation, le procédé comprend une étape de formation, sur une face de la deuxième couche de silicium opposée à la deuxième couche d'oxyde de silicium, une couche métallique définissant une deuxième électrode du transducteur.

Un autre mode de réalisation prévoit un transducteur CMUT, selon la revendication 13, comprenant :
- une première couche de silicium définissant une première électrode du transducteur ;
- une première couche d'oxyde de silicium disposée sur et en contact avec la face supérieure de la première couche de silicium ;
- des murs localisés d'oxyde de silicium s'étendant verticalement plus haut que la face supérieure de la première couche d'oxyde de silicium et pénétrant partiellement dans la première couche de silicium, lesdits murs délimitant latéralement une cavité du transducteur ;
- une deuxième couche d'oxyde de silicium fermant la cavité par sa face supérieure, la cavité s'étendant verticalement de la face supérieure de la première couche d'oxyde de silicium à la face inférieure de la deuxième couche d'oxyde de silicium ; et
- une deuxième couche de silicium disposée sur et en contact avec la face supérieure de la deuxième couche d'oxyde de silicium.

### Brève description des dessins

Ces caractéristiques et avantages, ainsi que d'autres, seront exposés en détail dans la description suivante de modes de réalisation particuliers faite à titre non limitatif en relation avec les figures jointes parmi lesquelles :
la figure 1A, la figure 1B, la figure 1C, la figure 1D, la figure 1E, la figure 1F, la figure 1G, la figure 1H et la figure 1I sont des vues en coupe illustrant des étapes successives d'un exemple d'un procédé de fabrication de transducteurs CMUT selon un mode de réalisation ;
la figure 2A, la figure 2B, la figure 2C, la figure 2D et la figure 2E sont des vues en coupe illustrant des étapes successives d'un autre exemple d'un procédé de fabrications de transducteurs CMUT selon un mode de réalisation ;
la figure 2F est une vue en coupe illustrant une variante de réalisation du dispositif de la figure 2E ; et
la figure 3 est une vue en coupe illustrant une autre variante de réalisation du dispositif de la figure 2E.

### Description des modes de réalisation

De mêmes éléments ont été désignés par de mêmes références dans les différentes figures. En particulier, les éléments structurels et/ou fonctionnels communs aux différents modes de réalisation peuvent présenter les mêmes références et peuvent disposer de propriétés structurelles, dimensionnelles et matérielles identiques.

Par souci de clarté, seuls les étapes et éléments utiles à la compréhension des modes de réalisation décrits ont été représentés et sont détaillés. En particulier, les diverses applications que peuvent avoir les transducteurs décrits n'ont pas été détaillées, les modes de réalisation décrits étant compatibles avec les applications usuelles de transducteurs ultrasonores, notamment dans des dispositifs d'imagerie ultrasonore. En outre, les circuits de contrôle des transducteurs décrits n'ont pas été détaillés, les modes de réalisation décrits étant compatibles avec tous ou la plupart des circuits connus de contrôle de transducteurs CMUT.

Dans la présente description, sauf précision contraire, on appelle transducteur CMUT un dispositif composé d'un ou plusieurs éléments de transduction CMUT disposés selon les besoins de l'application. Chaque élément de transduction CMUT est constitué d'une ou plusieurs cellules élémentaires de transduction CMUT connectées électriquement les unes aux autres, par exemple en parallèle. Chaque cellule élémentaire CMUT comprend par exemple une seule membrane flexible suspendue au-dessus d'une cavité, et deux électrodes opposées adaptées à recevoir un signal électrique d'excitation pour faire vibrer la membrane et/ou à générer un signal électrique de réponse sous l'effet d'une vibration de la membrane.

Sauf précision contraire, lorsque l'on fait référence à deux éléments connectés entre eux, cela signifie directement connectés sans éléments intermédiaires autres que des conducteurs, et lorsque l'on fait référence à deux éléments reliés (en anglais "coupled") entre eux, cela signifie que ces deux éléments peuvent être connectés ou être reliés par l'intermédiaire d'un ou plusieurs autres éléments.

Dans la description qui suit, lorsque l'on fait référence à des qualificatifs de position absolue, tels que les termes "avant", "arrière", "haut", "bas", "gauche", "droite", etc., ou relative, tels que les termes "dessus", "dessous", "supérieur", "inférieur", etc., ou à des qualificatifs d'orientation, tels que les termes "horizontal", "vertical", etc., il est fait référence sauf précision contraire à l'orientation des figures.

Sauf précision contraire, les expressions "environ", "approximativement", "sensiblement", et "de l'ordre de" signifient à 10 % près, de préférence à 5 % près.

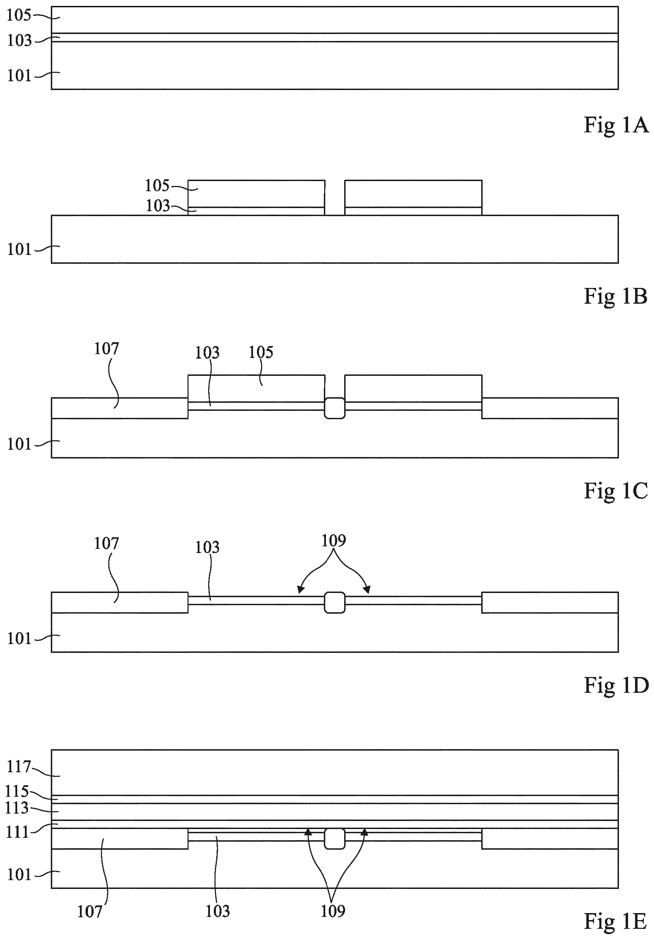

Les figures 1A à 1I sont des vues en coupe illustrant des étapes successives d'un exemple d'un procédé de fabrication de transducteurs CMUT selon un mode de réalisation. Sur les figures 1A à 1I, la réalisation d'une unique cellule élémentaire de transducteur CMUT a été représentée. Dans la pratique, un grand nombre de cellules peuvent être réalisés simultanément à partir d'un même substrat de départ.

La figure 1A est une vue en coupe illustrant la structure obtenue à l'issue d'une étape de formation, sur un substrat de départ 101 en silicium, d'une couche d'oxyde de silicium 103 puis d'une couche de nitrure de silicium 105. Le substrat 101 est de préférence relativement fortement dopé. A titre d'exemple, le substrat 101 est un substrat en silicium de niveau de dopage compris entre 10¹³ et 10¹⁸ atomes/cm³. L'épaisseur du substrat 101 est par exemple comprise entre 30 µm et 1 mm, par exemple entre 400 et 800 µm. Le substrat 101 correspond par exemple à une tranche (wafer en anglais) de silicium ou à une portion de tranche de silicium. On notera que le substrat 101 peut éventuellement être aminci en fin de procédé.

La couche d'oxyde de silicium 103 est formée sur et en contact avec la face supérieure du substrat 101. La couche 103 est par exemple formée par oxydation thermique en croissance sèche de façon à obtenir un oxyde de haute qualité. La couche 103 s'étend par exemple de façon continue et avec une épaisseur sensiblement uniforme sur toute la surface supérieure du substrat 101. L'épaisseur de la couche 103 est par exemple comprise entre 20 et 300 nm, par exemple entre 100 et 150 nm, par exemple de l'ordre de 125 nm.

La couche de nitrure de silicium 105 est par exemple déposée sur et en contact avec la face supérieure de la couche 103. La couche 105 s'étend par exemple de façon continue et avec une épaisseur sensiblement uniforme sur toute la surface du substrat 101. La couche 105 est par exemple déposée par dépôt chimique en phase vapeur, par exemple par LPCVD (de l'anglais « Low Pressure Chemical Vapor Deposition » - dépôt chimique en phase vapeur à basse pression), ce qui présente l'avantage de ne pas dégrader la qualité de la couche d'oxyde de silicium 103 sous-jacente. A titre de variante, la couche 105 peut être déposée par PECVD (de l'anglais « Plasma Enhanced Chemical Vapor Deposition » - dépôt chimique en phase vapeur assisté par plasma), ou par toute autre méthode de dépôt adaptée. L'épaisseur de la couche 105 est par exemple comprise entre 50 et 500 nm, par exemple entre 100 et 300 nm, par exemple de l'ordre de 200 nm.

La figure 1B illustre la structure obtenue à l'issue d'une étape de gravure localisée de l'empilement formé par les couches 103 et 105. Dans cet exemple, les couches 103 et 105 sont conservées uniquement en vis à vis des futures cavités des transducteurs CMUT. Les couches 103 et 105 sont par exemple gravées par un procédé de gravure sèche, par exemple par gravure plasma. A l'issue de la gravure, la face supérieure du substrat 101 se trouve exposée autour des futures cavités des transducteurs CMUT.

La figure 1C illustre la structure obtenue à l'issue d'une étape d'oxydation localisée du silicium du substrat 101, aussi appelé procédé LOCOS (de l'anglais LOCal Oxidation of Silicon). Lors de cette étape, on met en œuvre une oxydation thermique des portions de la face supérieure du substrat 101 exposées à l'issue de l'étape de gravure de la figure 1B. Ceci conduit à une croissance de murs d'oxyde de silicium 107 en vis à vis des portions exposées de la face supérieure du substrat 101, c'est à dire autour des futures cavités des transducteurs CMUT. La couche de nitrure de silicium 105 bloque en revanche l'oxydation aux emplacements des futures cavités du substrat 101. La hauteur des murs d'oxyde de silicium 107 définit l'épaisseur ou profondeur des futures cavités des transducteurs CMUT. Plus particulièrement, dans cet exemple, la profondeur des futures cavités des transducteurs CMUT correspond à la distance entre le plan de face supérieure des murs d'oxyde de silicium 107 et le plan de face supérieure de la couche d'oxyde de silicium 103, étant entendu que le plan de face supérieure des murs d'oxyde 107 est situé au-dessus du plan de face supérieure de la couche d'oxyde 103. Un avantage du procédé LOCOS est que la hauteur des murs 107, et donc la profondeur des cavités, peut être contrôlée précisément en contrôlant notamment la température et le temps d'oxydation. Ceci est tout particulièrement avantageux pour la réalisation de cavités de faible profondeur, par exemple de moins de 100 nm de profondeur, par exemple de l'ordre 50 nm de profondeur. Les modes de réalisation décrits ne se limitent toutefois aux cavités de faible profondeur. A titre d'exemple, la profondeur des cavités des transducteurs CMUT est comprise entre 10 nm et 1 µm.

A titre d'exemple illustratif, non limitatif, la couche d'oxyde de silicium présente une épaisseur de l'ordre de 125 nm et les murs d'oxyde de silicium 107 dépassent du niveau de la face supérieure du substrat 101 d'une hauteur de l'ordre de 175 nm, de façon à obtenir une profondeur de cavité de l'ordre de 50 nm. On notera qu'une partie de l'épaisseur du substrat est consommée et transformée en oxyde de silicium lors de l'oxydation. Par exemple, pour obtenir des murs 107 dépassant d'environ 175 nm par rapport au plan de face supérieure du substrat 101, une épaisseur de l'ordre de 137.5 nm du silicium du substrat est consommée lors de l'oxydation, ce qui conduit à des murs 107 présentant une hauteur totale de l'ordre de 312.5 nm (137,5 + 175 nm).

La figure 1D illustre la structure obtenue à l'issue d'une étape de retrait de la couche de nitrure de silicium 105. La couche 105 est retirée par un procédé de gravure sélective du nitrure de silicium par rapport à l'oxyde de silicium. La couche 105 est de préférence retirée par gravure humide, ce qui permet de préserver la qualité de la couche d'oxyde de silicium 103 sous-jacente. En particulier, ceci permet, par rapport à un procédé de gravure sèche, d'éviter la formation de microfissures sur la face supérieure de la couche d'oxyde de silicium 103. A l'issue de cette étape, seuls sont conservés les murs d'oxyde de silicium 107 entourant latéralement les cavités 109 des transducteurs CMUT, la couche d'oxyde de silicium 103 dont la face supérieure définit le fond des cavités 109, et le substrat 101 sous-jacent.

La figure 1E illustre la structure obtenue à l'issue d'une étape de report et de fixation, du côté de la face supérieure de la structure de la figure 1D, d'un empilement comportant, dans l'ordre à partir de la face supérieure de la structure de la figure 1D, une couche d'oxyde de silicium 111, une couche de silicium 113, une couche d'oxyde de silicium 115, et une couche de support 117, par exemple en silicium. A titre d'exemple, chacune des couches 111, 113, 115 et 117 s'étend de façon continue et avec une épaisseur sensiblement uniforme sur toute la surface de la structure de la figure 1D. Les couches 111, 113, 115 et 117 sont par exemple sensiblement planes. Dans cet exemple, le substrat 117 est en contact, par sa face inférieure, avec la face supérieure de la couche 115, la couche 115 est en contact, par sa face inférieure, avec la face supérieure de la couche 113, et la couche 113 est en contact, par sa face inférieure, avec la face supérieure de la couche 111. La couche 117 correspond par exemple à une tranche (wafer en anglais) de silicium ou à une portion de tranche de silicium.

L'empilement des couches 111, 113, 115 et 117 est formé séparément, puis reporté et fixé sur la face supérieure de la structure de la figure 1D.

A titre d'exemple, l'empilement des couches 117, 115 et 113 est une structure de type SOI (de l'anglais « Silicon On Insulator » - silicium sur isolant), la couche 117 constituant le substrat de support de la structure SOI, la couche 115 étant la couche d'oxyde de silicium enterrée de la structure SOI, et la couche 113 étant la couche active de silicium monocristallin de la structure SOI. L'épaisseur du substrat 117 est par exemple comprise entre 10 µm et 1 mm, par exemple entre 400 et 800 µm. L'épaisseur de la couche d'oxyde de silicium 115 est par exemple comprise entre 50 nm et 2 µm. L'épaisseur de la couche de silicium 113 est par exemple comprise entre 0,5 et 5 µm. La couche de silicium 113 est de préférence relativement fortement dopée. A titre d'exemple, le niveau de dopage de la couche 113 est compris entre 10¹³ et 10¹⁸ atomes/cm³. A titre de variante, la couche 113 peut être non intentionnellement dopée.

La couche d'oxyde de silicium 111 est par exemple formée sur et en contact avec la face inférieure (dans l'orientation de la figure 1E) de la couche de silicium 113, avant report de l'empilement 111-113-115-117 sur la face supérieure de la structure de la figure 1D. La couche 111 est par exemple formée par oxydation thermique en croissance sèche, par exemple dans les mêmes conditions que la couche 103 (figure 1A). L'épaisseur de la couche 111 est par exemple comprise entre 20 et 300 nm, par exemple entre 100 et 150 nm, par exemple de l'ordre de 125 nm. De préférence, l'épaisseur de la couche 111 est sensiblement égale à l'épaisseur de la couche 103.

L'empilement des couches 111, 113, 115 et 117 est ensuite reporté et fixé sur la face supérieure de la structure de la figure 1D. La fixation de l'empilement est de préférence réalisée par collage direct ou collage moléculaire de la face inférieure de la couche d'oxyde de silicium 111 sur la face supérieure des murs d'oxyde de silicium 107, sans apport de matière intermédiaire.

Pour améliorer la qualité du collage, un recuit de la structure à une température relativement élevée peut être prévu, par exemple à une température comprise entre 700 et 1100°C. On parle alors de collage fusion (« fusion bonding » en anglais).

A l'issue de cette étape, les cavités 109 des transducteurs CMUT sont fermées de façon hermétique. La face inférieure de la couche d'oxyde de silicium 111 définit la face supérieure des cavités 109. Le collage peut être réalisé sous-vide de façon à obtenir des cavités 109 présentant une pression inférieure à la pression atmosphérique.

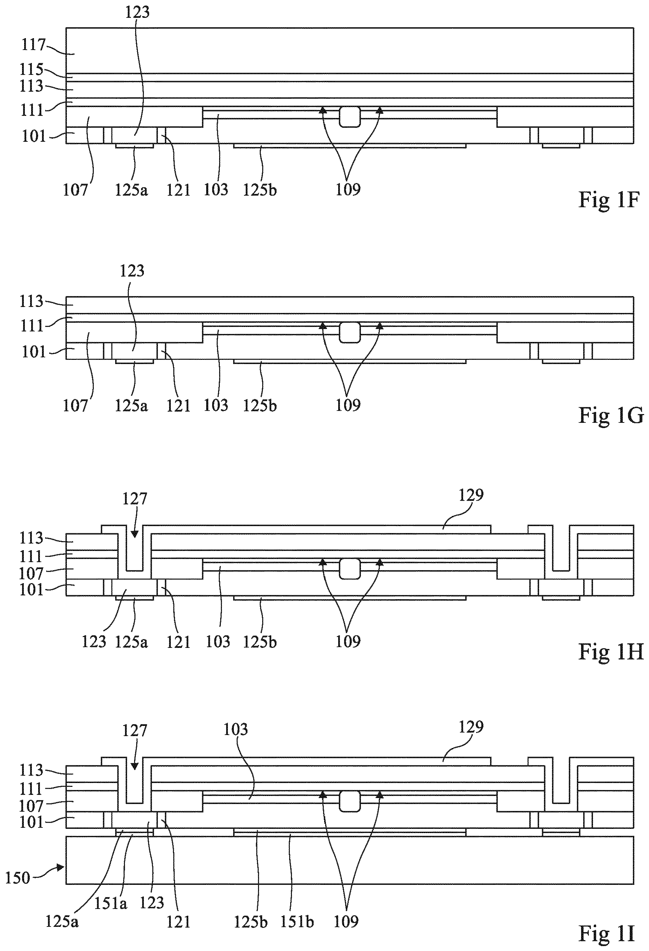

A l'issue de ces étapes, le substrat 117 et la couche d'oxyde de silicium enterrée 115 peuvent être retirées. La couche de silicium 113 est conservée et forme la membrane des transducteurs CMUT. La couche 113 peut en outre, lorsqu'elle est dopée, former, pour partie, l'électrode supérieure des transducteurs CMUT. Une couche conductrice, par exemple métallique (non visible sur la figure 1G, correspondant à la couche 129 dans l'exemple de la figure 1H), peut en outre être déposée sur et en contact avec la face supérieure de la couche semiconductrice 113, et former en partie l'électrode supérieure des transducteurs.

Dans cet exemple, le substrat 101 forme l'électrode inférieure des transducteurs CMUT. Diverses étapes de reprise de contact sur les électrodes des transducteurs CMUT et d'isolation électrique des électrodes des transducteurs CMUT peuvent en outre être mises en œuvre. Les figures 1F à 1I illustrent un exemple, non limitatif, de mise en œuvre de telles étapes.

La figure 1F illustre la structure obtenue à l'issue d'une étape d'amincissement du substrat 101, par sa face inférieure, et de formation d'éléments de reprise de contact du côté de la face inférieure du substrat 101 aminci.

A titre d'exemple, le substrat 101 est aminci par meulage en utilisant la couche 117 comme poignée. A l'issue de l'étape d'amincissement, l'épaisseur du substrat 101 est par exemple comprise entre 10 et 150 µm, par exemple entre 20 et 100 µm.

Après l'amincissement, des tranchées d'isolation 121 sont formées à partir de la face inférieure du substrat 101, en vis à vis des murs d'oxyde de silicium 107 des transducteurs CMUT. Les tranchées 121 s'étendent verticalement à travers le substrat 101, sur toute l'épaisseur du substrat 101, et débouchent sur la face inférieure des murs d'oxyde de silicium 107.

Plus particulièrement, dans cet exemple, pour chaque cellule élémentaire de transducteur CMUT, ou pour chaque élément de transducteur CMUT, on vient former, en périphérique de la cellule ou de l'élément, par exemple en périphérie de la cavité 109 de la cellule (du côté droit de la cavité dans l'exemple représenté), une tranchée d'isolation 121, par exemple de forme annulaire, délimitant latéralement une zone 123 du substrat 101 destinée à être connectée électriquement à l'électrode supérieure du transducteur. Dans cet exemple, la zone 123 est entièrement entourée et isolée électriquement du reste du substrat 101 par la tranchée d'isolation 121.

La tranchée 121 est par exemple remplie d'un matériau électriquement isolant, par exemple de l'oxyde de silicium. A titre de variante, les parois latérales de la tranchée 121 sont revêtues d'un matériau électriquement isolant, par exemple de l'oxyde de silicium, puis la tranchée est comblée avec un matériau électriquement isolant, par exemple du silicium polycristallin non dopé ou de l'oxyde de silicium.

La figure 1F illustre en outre la formation de métallisations de contact sur la face inférieure du substrat 101. Plus particulièrement, dans cet exemple, pour chaque transducteur CMUT ou pour chaque élément de transducteur CMUT, on forme deux métallisations de contact 125a et 125b disjointes sur et en contact avec la face inférieure du substrat 101. La métallisation 125a est située en périphérie de la cavité et est en contact uniquement avec la face inférieure de la zone 123 du substrat 101 isolée électriquement du reste du substrat par la tranchée 121. La métallisation 125b est située en vis à vis de la cavité 109 et s'étend par exemple sur la majeure partie de la surface de la cavité 109, par exemple sur sensiblement toute la surface de la cavité 109. La métallisation 125b n'est pas en contact avec la zone 123 du substrat 101.

On notera que dans l'exemple représenté, chaque élément de transducteur CMUT comprend deux cavités 109 (correspondant par exemple à deux cellules élémentaires de transduction) excitées simultanément et séparées latéralement par un mur d'oxyde de silicium 107. Les modes de réalisation décrits ne se limitent pas à cet exemple particulier. A titre de variante, chaque transducteur CMUT peut comporter une unique cavité 109 ou un nombre de cavités 109 supérieur à 2.

La figure 1G illustre la structure obtenue à l'issue d'une étape de retrait de la couche support 117 et de la couche d'oxyde de silicium 115 de la structure de la figure 1F, de façon à exposer la face supérieure de la couche de silicium 113, formant la membrane des transducteurs CMUT.

La figure 1H illustre la structure obtenue à l'issue d'une étape de reprise d'un contact électrique sur la membrane (et électrode supérieure) 113 de chaque transducteur CMUT.

Plus particulièrement, dans cet exemple, on vient former, à partir de la face supérieure de la structure de la figure 1G, dans chaque transducteur CMUT, à l'aplomb de la zone 123 du substrat 101 délimitée latéralement par la tranchée 121, une ouverture 127 s'étendant verticalement à travers la membrane 113, la couche d'oxyde de silicium 111 et le mur d'oxyde de silicium 107, et débouchant sur la face supérieure de la zone 123 du substrat 101 délimitée latéralement par la tranchée 121.

On vient ensuite former une métallisation 129 s'étendant sur et en contact avec la face supérieure de la membrane 113, en vis à vis de la cavité 109 du transducteur, par exemple sur la majeure partie de la surface de la cavité 109 ou sur sensiblement toute la surface de la cavité 109. La métallisation 129 s'étend en outre sur les flancs et au fond de l'ouverture 127. En particulier, la métallisation 129 vient en contact avec la face supérieure de la zone 123 du substrat 101 délimitée latéralement par la tranchée 121. Ainsi, la métallisation 129 est reliée électriquement à la métallisation inférieure 125a du transducteur par l'intermédiaire de la zone 123 du substrat 101. La métallisation 129 est en revanche isolée électriquement du reste du substrat 101. Ainsi, les métallisations 125a et 125b sont reliées électriquement respectivement à l'électrode supérieure et à l'électrode inférieure du transducteur CMUT. A titre d'exemple, pour former les métallisations 129, une couche métallique est d'abord déposée pleine plaque, sur toute la surface supérieure de la structure, cette couche étant ensuite gravée localement pour isoler électriquement les unes des autres les électrodes des différents transducteurs. Dans le cas où la couche semiconductrice 113 est dopée, la gravure peut être prolongée à travers la couche 113, de façon à isoler électriquement les unes des autres les électrodes des différents transducteurs.

La figure 1I illustre la structure obtenue à l'issue d'une étape de report et de fixation de la structure de la figure 1H sur un circuit électronique de contrôle 150. Le circuit électronique 150 est par exemple un circuit intégré préalablement formé dans et sur un substrat semiconducteur, par exemple un substrat en silicium. Le circuit électronique 150 est par exemple réalisé en technologie CMOS (de l'anglais « Complementary Metal Oxide Semiconductor » - métal oxyde semiconducteur complémentaire). Le circuit électronique 150 est par exemple configuré pour, lors d'une phase d'émission, appliquer entre les électrodes de chaque transducteur une tension alternative d'excitation superposée à une tension de polarisation continue, de façon à provoquer l'émission d'une onde acoustique ultrasonore par le transducteur, et, lors d'une phase de réception, appliquer entre les électrodes de chaque transducteur une tension de polarisation continue et lire entre lesdites électrodes une tension alternative générée sous l'effet d'une onde acoustique ultrasonore reçue. Le substrat dans et sur lequel est intégré le circuit 150 correspond par exemple à une tranche (wafer en anglais) de silicium ou à une portion de tranche de silicium. Ainsi, dans cet exemple, le report mis en œuvre lors de cette étape est un report de tranche à tranche. On parle aussi d'assemblage ou encapsulation à l'échelle de la tranche, ou WLP, de l'anglais « Wafer Level Packaging ».

Dans l'exemple représenté, le circuit électronique 150 comprend, du côté de sa face supérieure, pour chaque transducteur CMUT de la structure de la figure 1H, deux métallisations de connexion 151a et 151b destinées à être connectées respectivement aux métallisations de connexion 125a et 125b du transducteur.

Dans cet exemple, lors du report, chaque métallisation 125a de la structure de la figure 1H est mise en contact, par sa face inférieure, avec la face supérieure d'une métallisation 151a correspondante du circuit électronique 150, et chaque métallisation 125b de la structure de la figure 1H est mise en contact, par sa face inférieure, avec la face supérieure d'une métallisation 151b correspondante du circuit électronique 150. La fixation des métallisations 125a, 125b aux métallisations 150a, 150b peut être une fixation par collage direct, par thermocompression, par collage eutectique, au moyen d'une couche de soudure, de plots de soudure, de billes de soudure, ou par tout autre moyen connu de fixation et de connexion électrique de métallisations de contact.

A titre de variante, non représentée, pour améliorer la tenue mécanique de l'assemblage lors des diverses étapes du procédé, la fixation du circuit intégré de contrôle 150 sur la structure de transducteurs CMUT peut être réalisée après les étapes de la figure 1F et avant l'étape de retrait de la couche support 117 (figure 1G).

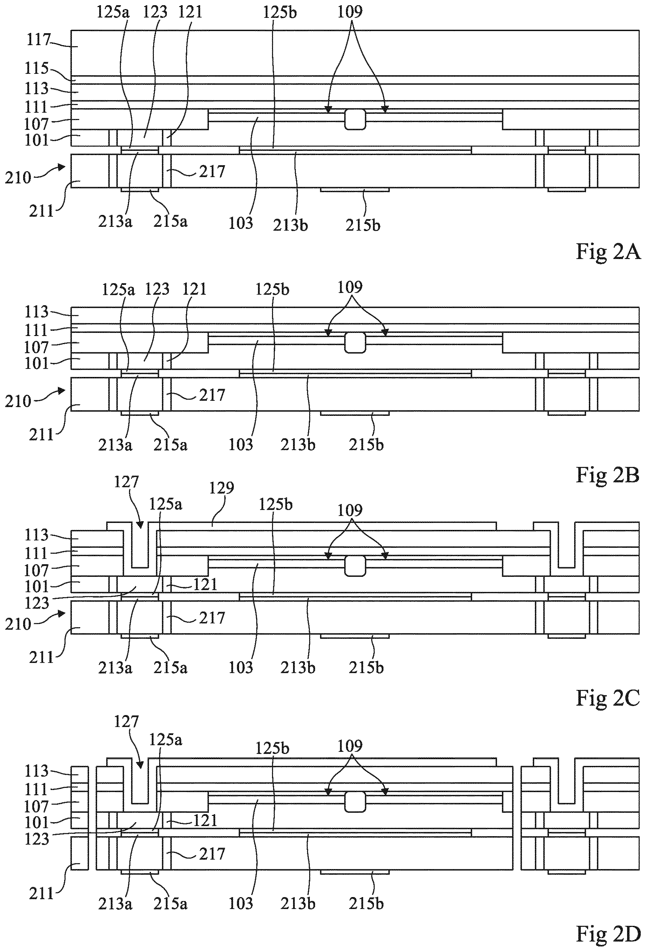

La structure de la figure 1I peut ensuite être découpée en une pluralité de puces individuelles comprenant chacune un ou plusieurs transducteurs CMUT, par exemple une matrice de transducteurs CMUT, et un circuit électronique de contrôle du ou des transducteurs CMUT de la puce. La découpe est par exemple réalisée par sciage, par exemple de façon similaire à ce qui a été illustré dans l'exemple décrit ci-après de la figure 2D.

Les figures 2A à 2E illustrent un autre exemple de mise en œuvre d'étapes de reprise de contact sur les transducteurs CMUT réalisés par le procédé des figures 1A à 1E.

Le procédé des figures 2A à 2E diffère du procédé des figures 1F à 1I principalement en ce que, dans le procédé des figures 2A à 2E, l'assemblage des transducteurs et du circuit électronique de contrôle des transducteurs est réalisé à l'échelle de la puce individuelle, et non pas à l'échelle du substrat ou de la tranche (avant découpe en puces individuelles) comme dans le procédé des figures 1F à 1I.

Le procédé des figures 2A à 2F comprend des étapes identiques ou similaires à celles décrites ci-dessus en relation avec la figure 1F d'amincissement du substrat 101, de formation de tranchées d'isolation 121 délimitant des zones de connexion 123 du substrat, et de formation de métallisations de contact 125a, 125b sur la face inférieure du substrat 101.

La figure 2A illustre plus particulièrement une étape de report et de fixation de la structure de la figure 1F sur une structure d'interconnexion 210.

La structure d'interconnexion 210 est par exemple formée dans et sur un substrat semiconducteur 211, par exemple un substrat en silicium. Le substrat 211 est de préférence relativement fortement dopé. A titre d'exemple, le substrat 211 est un substrat en silicium de niveau de dopage compris entre 10¹³ et 10¹⁸ atomes/cm³. L'épaisseur du substrat 211 est par exemple comprise entre 30 µm et 1 mm.

La structure d'interconnexion 210 comprend, pour chaque transducteur CMUT de la structure de la figure 1F, deux métallisations de contact 213a et 213b disposées sur et en contact avec la face supérieure du substrat 211 et destinées à être connectées respectivement aux métallisations de contact 125a et 125b du transducteur. La structure d'interconnexion 210 comprend en outre, pour chaque transducteur CMUT de la structure de la figure 1F deux métallisations de contact 215a et 215b disposées sur et en contact avec la face inférieure du substrat 211, par exemple à l'aplomb respectivement des métallisations de contact 213a et 213b. La structure d'interconnexion 210 comprend en outre des tranchées d'isolation verticales 217, par exemple similaires aux tranchées 121 de la structure de la figure 1F, s'étendant sur toute l'épaisseur du substrat 211. Les tranchées 217 sont agencées de façon que, pour chaque transducteur CMUT, les métallisations de connexion 213a et 215a associées au transducteur soient reliées électriquement l'une à l'autre par une zone du substrat 211 et soient isolées électriquement des métallisations de contact 213b et 215b du transducteur ainsi que des métallisations de contact 213a, 215a, 213b, 215b des autres transducteurs.

La structure d'interconnexion 210 peut être réalisée séparément, puis reportée et fixée sur la face inférieure de la structure de la figure 1F. Le report est par exemple réalisé à l'échelle du substrat ou wafer (WLP).

Dans cet exemple, lors du report, chaque métallisation 125a de la structure de la figure 1F est mise en contact, par sa face inférieure, avec la face supérieure d'une métallisation 213a correspondante de la structure d'interconnexion 210, et chaque métallisation 125b de la structure de la figure 1H est mise en contact, par sa face inférieure, avec la face supérieure d'une métallisation 213b correspondante de la structure d'interconnexion 210. La fixation des métallisations 125a, 125b aux métallisation 213a, 213b peut être une fixation par collage direct, par thermocompression, au moyen d'une couche de soudure, de plots de soudure, de billes de soudure, ou par toute autre moyen connu de fixation et connexion électrique de métallisations de contact.

La figure 2B illustre la structure obtenue à l'issue d'une étape de retrait de la couche support 117 et de la couche d'oxyde de silicium 115 de la structure de la figure 2A, de façon à exposer la face supérieure de la couche de silicium 113, formant la membrane des transducteurs CMUT.

La figure 2C illustre la structure obtenue à l'issue d'une étape de reprise d'un contact électrique sur la membrane (et électrode supérieure) 113 de chaque transducteur CMUT. Cette étape est similaire à ce qui a été décrit ci-dessus en relation avec la figure 1H.

La figure 2D illustre une étape de découpe de la structure de la figure 2C en une pluralité de puces individuelles comprenant chacune un ou plusieurs transducteurs CMUT, par exemple une matrice de transducteurs CMUT, et une portion correspondante de la structure d'interconnexion 210. La découpe est par exemple réalisée par sciage.

Chaque puce individuelle peut ensuite être fixée et connectée électriquement à un circuit électronique de contrôle, par exemple une puce de circuit intégré présentant des dimensions latérales inférieures à celles du transducteur.

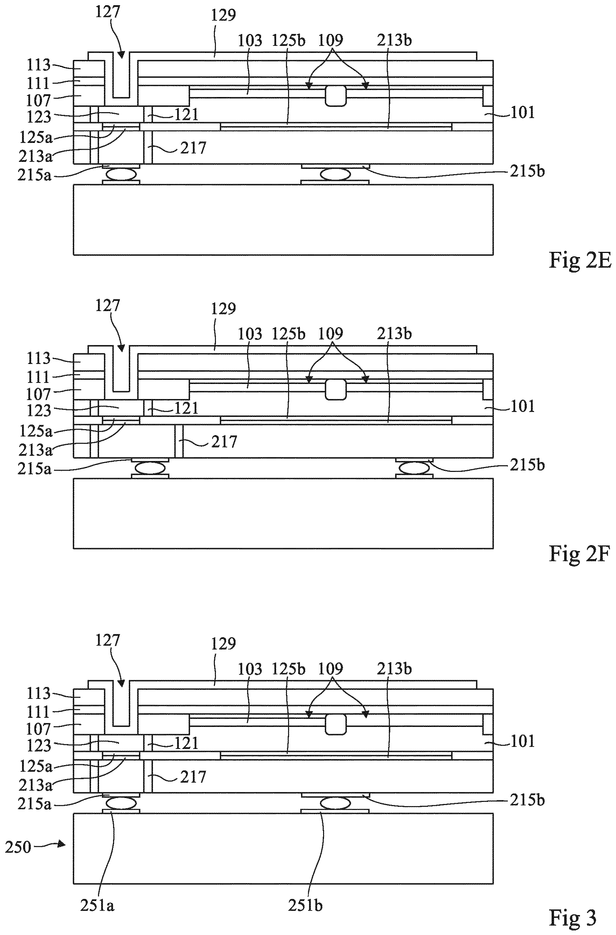

La figure 2E illustre la structure obtenue à l'issue d'une étape de report et de fixation d'une puce de transducteur obtenue à l'issue de l'étape de la figure 2D, sur une puce de circuit électronique de contrôle 250 préalablement formée à partir d'un substrat semiconducteur, par exemple un substrat en silicium. Le circuit électronique 250 est par exemple réalisé en technologie CMOS. Dans l'exemple représenté, le circuit électronique 250 comprend, du côté de sa face supérieure, pour chaque transducteur CMUT de la puce de transducteur, deux métallisations de connexion 251a et 251b destinées à être connectées respectivement aux métallisations de connexion 215a et 215b de la puce de transducteur.

Les métallisations 215a, 215b de la puce de transducteur sont connectées respectivement aux métallisation 251a, 251b de la puce de contrôle par tout moyen de connexion adapté, par exemple par collage direct, par thermocompression, au moyen d'une couche de soudure, de plots de soudure, de billes de soudure, etc.

Un avantage du mode de réalisation des figures 2A à 2E est que la structure d'interconnexion 210 peut permettre, dans une certaine mesure, d'adapter la disposition des contacts du CMUT (125a et 125b) à des dispositions différentes des contacts du CMOS (en vis-à-vis des contacts 215a et 215b). Ainsi, pour un même design de transducteur CMUT, on peut s'adapter à différents circuits CMOS en changeant uniquement le design de la structure d'interconnexion 210, généralement plus simple à fabriquer. Ainsi, bien que l'on ait sur les figures des métallisations 215a, 215b et des tranchées d'isolation 217 alignées verticalement avec respectivement les métallisations 125a, 125b et avec les tranchées d'isolation 121, en pratique, les métallisations 215a, 215b et les tranchées d'isolation 217 peuvent ne pas être alignées verticalement avec respectivement les métallisations 125a, 125b et les tranchées d'isolation 121, comme illustré par exemple en figure 2F.

Un autre avantage de la structure d'interconnexion 210 est qu'elle permet de rigidifier l'ensemble CMUT + structure d'interconnexion après retrait de la couche support 117 et avant le report des circuits de contrôle.

Un avantage des modes de réalisation décrits en relation avec les figures 1A à 1I, 2A à 2E et 2F est que les couches d'oxyde de silicium 103 et 111 situées respectivement du côté de la face inférieure et du côté de la face supérieure de la cavité 109 présentent une qualité élevée d'une part parce qu'elles sont réalisées par un procédé d'oxydation thermique en croissance sèche pleine plaque permettant d'obtenir un oxyde de silicium de haute qualité, et d'autre part parce qu'elles ne subissent aucune étape d'attaque ou de gravure partielle d'épaisseur au cours du procédé. Ceci permet de limiter significativement les phénomènes parasites d'injection et de piégeage de charges électriques dans les couches 103 et 111, susceptibles de dégrader le fonctionnement des transducteurs.

De préférence, les couches 103 et 111 ont la même épaisseur ou sensiblement la même épaisseur ce qui permet de symétriser la structure et de favoriser l'équilibrage de la répartition des charges injectées dans les couches 103 et 111.

La figure 3 est une vue en coupe illustrant une variante de réalisation du dispositif de la figure 2E.

Dans cette variante, la couche diélectrique 103 a été retirée dans l'une des deux cavités 109 du transducteur CMUT et conservée dans l'autre cavité. Ceci permet d'obtenir deux hauteurs de cavité différentes, par exemple pour deux cavités de formes et/ou de dimensions latérales différentes, sur un même substrat. En particulier, l'absence de la couche 103 dans l'une des cavités permet de bénéficier d'un plus grand débattement de la membrane et ainsi d'utiliser une membrane de plus grande surface. Ceci permet, par exemple, d'obtenir un transducteur adapté à émettre simultanément à deux fréquences acoustiques distinctes. La gravure localisée de la couche 103 est par exemple mise en œuvre après l'étape de retrait de la couche de nitrure de silicium 105 (figure 1D) et avant la fermeture des cavités 109 par collage de la couche d'oxyde de silicium 111 et de la membrane 113 (figure 1E).

La variante de la figure 3 peut bien entendu être combinée avec le procédé des figures 1F à 1I.

Divers modes de réalisation et variantes ont été décrits. La personne du métier comprendra que certaines caractéristiques de ces divers modes de réalisation et variantes pourraient être combinées, et d'autres variantes apparaîtront à la personne du métier. En particulier, les modes de réalisation décrits ne se limitent pas aux exemples de dimensions mentionnés dans la présente description.

Par ailleurs, on notera que dans les exemples décrits ci-dessus, les murs d'oxyde de silicium 107 délimitant latéralement les cavités 109 des transducteurs sont formés par un procédé LOCOS sur la face supérieure du substrat 101, formant l'électrode inférieure des transducteurs. A titre de variante, les murs 107 peuvent être formés par un procédé LOCOS sur la face inférieure de la couche de silicium 113, formant la membrane et l'électrode supérieure des transducteurs. Dans ce cas, la couche d'oxyde de silicium inférieure 103 de la structure n'est pas gravée. La couche de nitrure de silicium 105 est alors formée sur la face inférieure (dans l'orientation de la figure 1E) de la couche d'oxyde 111, et l'empilement des couches 111 et 105 est gravé de façon localisée pour être conservé uniquement en vis à vis des futures cavités 109 des transducteurs.

Dans une autre variante, le procédé LOCOS peut être mis en œuvre du côté de la face inférieure de la membrane et du côté de la face supérieure du substrat 101, avant report de la membrane sur le substrat 101. Dans ce cas, il conviendra d'aligner les portions inférieures des murs 107 avec les portions supérieures des murs 107 lors du report.

Enfin, la mise en œuvre pratique des modes de réalisation et variantes décrits est à la portée de la personne du métier à partir des indications fonctionnelles données ci-dessus, sans s'écarter de la portée des revendications annexées.

## Revendications

1. Procédé de fabrication d'un transducteur CMUT, comprenant les étapes suivantes :
a) former une première couche d'oxyde de silicium (103) sur une face d'une première couche de silicium (101) définissant une première électrode du transducteur ;
b) former une deuxième couche d'oxyde de silicium (111) sur une face d'une deuxième couche de silicium (113) ;
c) après l'étape a), former, du côté de ladite face de la première couche de silicium (101), par oxydation localisée du silicium de la première couche de silicium (101), des murs d'oxyde de silicium (107) ayant une hauteur supérieure à l'épaisseur de la première couche d'oxyde de silicium (103), lesdits murs (107) délimitant latéralement une cavité (109) du transducteur ; et
d) après les étapes b) et c), reporter et fixer l'ensemble comprenant la deuxième couche de silicium (113) et la deuxième couche d'oxyde de silicium (111) sur l'ensemble comprenant la première couche de silicium (101), la première couche d'oxyde de silicium (103) et les murs d'oxyde de silicium (107), de façon à fermer la cavité (109) du transducteur, ladite cavité (109) s'étendant verticalement de la face de la première couche d'oxyde de silicium (103) opposée à la première couche de silicium (101) à la face de la deuxième couche d'oxyde de silicium (111) opposée à la deuxième couche de silicium (113).

2. Procédé selon la revendication 1, dans lequel, à l'étape a), la première couche d'oxyde de silicium (103) est formée par oxydation thermique en croissance sèche de ladite face de la première couche de silicium (101) et, à l'étape b), la deuxième couche d'oxyde de silicium (111) est formée par oxydation thermique en croissance sèche de ladite face de la deuxième couche de silicium (113).

3. Procédé selon la revendication 1 ou 2, dans lequel l'étape c) comprend une étape de dépôt d'une couche de nitrure de silicium (105) sur la face de la première couche d'oxyde de silicium (103) opposée à la première couche de silicium (101), suivie d'une étape de gravure localisée de la couche de nitrure de silicium (105) et de la première couche d'oxyde de silicium (103) aux emplacements souhaités des murs (107) d'oxyde de silicium, suivie d'une étape d'oxydation thermique pour former les murs (107) d'oxyde de silicium, suivie d'une étape de retrait de la couche de nitrure de silicium (105).

4. Procédé selon la revendication 3, dans lequel le retrait de la couche de nitrure de silicium (105) est réalisé par gravure humide.

5. Procédé selon l'une quelconque des revendications 1 à 4, dans lequel, à l'étape d), l'ensemble comprenant la deuxième couche de silicium (113) et la deuxième couche d'oxyde de silicium (111) est fixé sur l'ensemble comprenant la première couche de silicium (101), la première couche d'oxyde de silicium (103) et les murs d'oxyde de silicium (107) par collage direct.

6. Procédé selon la revendication 5, dans lequel le collage direct mis en œuvre à l'étape d) comprend un recuit à une température comprise entre 700 et 1100°C.

7. Procédé selon la revendication 5 ou 6, dans lequel le collage direct mis en œuvre à l'étape d) est un collage de la face de la deuxième couche d'oxyde de silicium (111) opposée à la deuxième couche de silicium (113) sur la face des murs d'oxyde de silicium (107) opposée à la première couche d'oxyde de silicium (101).

8. Procédé selon l'une quelconque des revendications 1 à 7, dans lequel la première couche de silicium (101) est un substrat fixe et la deuxième couche de silicium (113) est une membrane flexible du transducteur.

9. Procédé selon l'une quelconque des revendications 1 à 8, dans lequel l'épaisseur de la première couche d'oxyde de silicium (103) est sensiblement égale à l'épaisseur de la deuxième couche d'oxyde de silicium (111).

10. Procédé selon l'une quelconque des revendications 1 à 9, comprenant en outre des étapes formation, sur la face de la première couche de silicium (101) opposée à la première couche d'oxyde de silicium (103), de métallisations de contact (125a, 125b) du transducteur, et une étape de connexion desdites métallisations de contact à un circuit intégré de contrôle (150 ; 250) du transducteur.

11. Procédé selon l'une quelconque des revendications 1 à 10, dans lequel la première couche de silicium (101) est dopée.

12. Procédé selon l'une quelconque des revendications 1 à 11, comprenant une étape de formation, sur une face de la deuxième couche de silicium (113) opposée à la deuxième couche d'oxyde de silicium (111), une couche métallique (129) définissant une deuxième électrode du transducteur.

13. Transducteur CMUT comprenant :
- une première couche de silicium (101) définissant une première électrode du transducteur ;
- une première couche d'oxyde de silicium (101) disposée sur et en contact avec la face supérieure de la première couche de silicium (101) ;
- des murs localisés d'oxyde de silicium (107) s'étendant verticalement plus haut que la face supérieure de la première couche d'oxyde de silicium (103) et pénétrant partiellement dans la première couche de silicium, lesdits murs (107) délimitant latéralement une cavité (109) du transducteur ;
- une deuxième couche d'oxyde de silicium (111) fermant la cavité par sa face supérieure, la cavité s'étendant verticalement de la face supérieure de la première couche d'oxyde de silicium (103) à la face inférieure de la deuxième couche d'oxyde de silicium (111) ; et
- une deuxième couche de silicium (113) disposée sur et en contact avec la face supérieure de la deuxième couche d'oxyde de silicium (111).

## Patentansprüche

1. Verfahren zur Herstellung eines CMUT-Wandlers, das die folgenden Schritte aufweist:
a) Ausbilden einer ersten Siliziumoxidschicht (103) auf einer Fläche einer ersten Siliziumschicht (101), die eine erste Elektrode des Wandlers definiert;
b) Ausbilden einer zweiten Siliziumoxidschicht (111) auf einer Fläche einer zweiten Siliziumschicht (113);
c) nach dem Schritt a), Ausbilden an der Seite der Fläche der ersten Siliziumschicht (101), durch lokales Ätzen des Siliziums der ersten Siliziumschicht (101), von Siliziumoxidwänden (107) mit einer Höhe, die höher ist als die Dicke der ersten Siliziumoxidschicht (103), wobei die Wände (107) seitlich einen Hohlraum (109) des Wandlers begrenzen; und
d) nach den Schritten b) und c) Übertragen und Befestigen des Satzes aus der zweiten Siliziumschicht (113) und der zweiten Siliziumoxidschicht (111) auf dem Satz aus der ersten Siliziumschicht (101), der ersten Siliziumoxidschicht (103) und den Siliziumoxidwänden (107), um den Hohlraum (109) des Wandlers zu schließen, wobei sich der Hohlraum (109) vertikal von der Fläche der ersten Siliziumoxidschicht (103) gegenüber der ersten Siliziumschicht (101) bis zur Fläche der zweiten Siliziumoxidschicht (111) gegenüber der zweiten Siliziumschicht (113) erstreckt.

2. Verfahren nach Anspruch 1, wobei in Schritt a) die erste Siliziumoxidschicht (103) durch Trockenwachstum mittels thermischer Oxidation der Fläche der ersten Siliziumschicht (101) gebildet wird und in Schritt b) die zweite Siliziumoxidschicht (111) durch Trockenwachstum mittels thermischerg6 Oxidation der Fläche der zweiten Siliziumschicht (113) gebildet wird.

3. Verfahren nach Anspruch 1 oder 2, wobei Schritt c) einen Schritt des Abscheidens einer Siliziumnitridschicht (105) auf der Fläche der ersten Siliziumoxidschicht (103) gegenüber der ersten Siliziumschicht (101) aufweist, gefolgt von einem Schritt des lokalen Ätzens der Siliziumnitridschicht (105) und der ersten Siliziumoxidschicht (103) an den gewünschten Stellen der Siliziumoxidwände (107), gefolgt von einem Schritt des thermischen Oxidierens, um die Siliziumoxidwände (107) zu bilden, gefolgt von einem Schritt des Entfernens der Siliziumnitridschicht (105).

4. Verfahren nach Anspruch 3, wobei das Entfernen der Siliziumnitridschicht (105) durch Nassätzen erfolgt.

5. Verfahren nach einem der Ansprüche 1 bis 4, wobei in Schritt d) der Satz aus der zweiten Siliziumschicht (113) und der zweiten Siliziumoxidschicht (111), durch direktes Bonden an dem Satz aus der ersten Siliziumschicht (101), der ersten Siliziumoxidschicht (103) und den Siliziumoxidwänden (107) befestigt wird.

6. Verfahren nach Anspruch 5, wobei das in Schritt d) durchgeführte direkte Bonden ein Annealing bei einer Temperatur zwischen 700 und 1100 °C aufweist.

7. Verfahren nach Anspruch 5 oder 6, wobei das in Schritt d) durchgeführte direkte Bonden ein Bonden der Fläche der zweiten Siliziumoxidschicht (111) gegenüber der zweiten Siliziumschicht (113) auf der Fläche der Siliziumoxidwände (107) gegenüber der zweiten Siliziumoxidschicht (101) ist.

8. Verfahren nach einem der Ansprüche 1 bis 7, wobei die erste Siliziumschicht (101) ein festes Substrat ist und die zweite Siliziumschicht (113) eine flexible Membran des Wandlers ist.

9. Verfahren nach einem der Ansprüche 1 bis 8, wobei die Dicke der ersten Siliziumoxidschicht (103) im Wesentlichen gleich der Dicke der zweiten Siliziumoxidschicht (111) ist.

10. Das Verfahren gemäß einem der Ansprüche 1 bis 9, dass ferner die Schritte des Ausbildens einer Kontaktmetallisierung (125a, 125b) des Wandlers auf der Fläche der ersten Siliziumschicht (101), die der ersten Siliziumoxidschicht (103) gegenüberliegt, und einen Schritt des Verbindens der Kontaktmetallisierung mit einer integrierten Steuerschaltung (150; 250) des Wandlers aufweist.

11. Verfahren nach einem der Ansprüche 1 bis 10, wobei die erste Siliziumschicht (101) dotiert ist.

12. Verfahren nach einem der Ansprüche 1 bis 11, das einen Schritt des Ausbildens einer Metallschicht (129) auf einer Fläche der zweiten Siliziumschicht (113) gegenüber der zweiten Siliziumoxidschicht (111) aufweist, wobei die Metallschicht eine zweite Elektrode des Wandlers definiert.

13. **CMUT-Wandler,** aufweisend:
- eine erste Siliziumschicht (101), die eine erste Elektrode des Wandlers definiert;
- eine erste Siliziumoxidschicht (103), die auf der oberen Fläche der ersten Siliziumschicht (101) angeordnet ist und diese berührt;
- lokale Siliziumoxid-Wände (107), die sich vertikal höher als die obere Fläche der ersten Siliziumoxidschicht (103) erstrecken und teilweise in die erste Siliziumschicht eindringen, wobei die Wände (107) seitlich einen Hohlraum (109) des Wandlers begrenzen;
- eine zweite Siliziumoxidschicht (111), die den Hohlraum an seiner oberen Fläche verschließt, wobei sich der Hohlraum vertikal von der oberen Fläche der ersten Siliziumoxidschicht (103) zur unteren Fläche der zweiten Siliziumoxidschicht (111) erstreckt; und
- eine zweite Siliziumschicht (113), die auf der oberen Fläche der zweiten Siliziumoxidschicht (111) angeordnet ist und diese berührt.

## Claims

1. A method of manufacturing a CMUT transducer, comprising the following steps:
a) forming a first silicon oxide layer (103) on a face of a first silicon layer (101) defining a first electrode of the transducer;
b) forming a second silicon oxide layer (111) on a face of a second silicon layer (113);
c) subsequent to step a), forming at the side of said face of the first silicon layer (101), by locally etching the silicon of the first silicon layer (101), silicon oxide walls (107) having a height higher than the thickness of the first silicon oxide layer (103), said walls (107) laterally delineating a cavity (109) of the transducer; and
d) subsequent to steps b) and c), transferring and attaching the set comprising the second silicon layer (113) and the second silicon oxide layer (111) on the set comprising the first silicon layer (101), the first silicon oxide layer (103), and the silicon oxide walls (107), so as to close the cavity (109) of the transducer, said cavity (109) vertically extending from the face of the first silicon oxide layer (103) opposite to the first silicon layer (101) to the face of the second silicon oxide layer (111) opposite to the second silicon layer (113).

2. The method according to claim 1, wherein in step a), the first silicon oxide layer (103) is formed by dry-growing thermal oxidizing said face of the first silicon layer (101), and, in step b), the second silicon oxide layer (111) is formed by dry-growing thermal oxidizing said face of the second silicon layer (113).

3. The method according to claim 1 or 2, wherein step c) comprises a step of depositing a silicon nitride layer (105) on the face of the first silicon oxide layer (103) opposite to the first silicon layer (101), followed with a step of locally etching the silicon nitride layer (105) and the first silicon oxide layer (103) at the desired locations of the silicon oxide walls (107), followed with a step of thermally oxidizing so as to form the silicon oxide walls (107), followed with a step of removing the silicon nitride layer (105).

4. The method according to claim 3, wherein removing the silicon nitride layer (105) is performed by wet etching.

5. The method according to any of claims 1 to 4, wherein in step d), the set comprising the second silicon layer (113) and the second silicon oxide layer (111) is attached on the set comprising the first silicon layer (101), the first silicon oxide layer (103), and the silicon oxide walls (107) by direct bonding.

6. The method according to claim 5, wherein the direct bonding implemented in step d) comprises an annealing at a temperature comprised between 700 and 1,100°C.

7. The method according to claim 5 or 6, wherein the direct bonding implemented in step d) is a bonding of the face of the second silicon oxide layer (111) opposite to the second silicon layer (113) on the face of the silicon oxide walls (107) opposite to the second silicon oxide layer (101).

8. The method according to any of claims 1 to 7, wherein the first silicon layer (101) is a fixed substrate, and the second silicon layer (113) is a flexible membrane of the transducer.

9. The method according to any of claims 1 to 8, wherein the thickness of the first silicon oxide layer (103) is substantially equal to the thickness of the second silicon oxide layer (111).

10. The method according to any of claims 1 to 9, further comprising steps of forming, on the face of the first silicon layer (101) opposite to the first silicon oxide layer (103), contact metallisation (125a, 125b) of the transducer, and a step of connecting said contact metallisation with a control integrated circuit (150; 250) of the transducer.

11. The method according to any of claims 1 to 10, wherein the first silicon layer (101) is doped.

12. The method according to any of claims 1 to 11, comprising a step of forming, on a face of the second silicon layer (113) opposite to the second silicon oxide layer (111), a metal layer (129) defining a second electrode of the transducer.

13. A CMUT transducer comprising:
- a first silicon layer (101) defining a first electrode of the transducer;
- a first silicon oxide layer (101) disposed on and contacting the upper face of the first silicon layer (101);
- silicon oxide localised walls (107) vertically extending higher than the upper face of the first silicon oxide layer (103) and partially entering the first silicon layer, said walls (107) laterally delineating a cavity (109) of the transducer;
- a second silicon oxide layer (111) closing the cavity at its upper face, the cavity vertically extending from the upper face of the first silicon oxide layer (103) to the lower face of the second silicon oxide layer (111); and
- a second silicon layer (113) disposed on and contacting the upper face of the second silicon oxide layer (111).
